# EUROPÄISCHE PATENTSCHRIFT

(11) **EP 2 883 191 B1**
(45) Veröffentlichungstag und Bekanntmachung des Hinweises auf die Patenterteilung: **09.04.2025**
(21) Anmeldenummer: 13739390.6
(22) Anmeldetag: 12.07.2013
(51) Int. Cl.: G06V 30/146, G06V 30/14

(54) **DOKUMENTENLESEGERÄT MIT EINER DOKUMENTENAUFLAGE**
DOCUMENT SCANNING DEVICE HAVING A DOCUMENT BED
APPAREIL DE LECTURE DE DOCUMENT ÉQUIPÉ D'UN SUPPORT DE DOCUMENT

(30) Priorität: 10.08.2012 DE 102012214280
(43) Veröffentlichungstag der Anmeldung: 17.06.2015
(73) Patentinhaber: Bundesdruckerei GmbH, 10969 Berlin (DE)
(72) Erfinder: WOLF, Andreas, 07743 Jena (DE); COBERNUSS, Martin, 30419 Hannover (DE); RABELER, Uwe, 30453 Hannover (DE)
(74) Vertreter: Patentship Patentanwaltsgesellschaft mbH
(86) Internationale Anmeldenummer: PCT/EP2013/064837
(87) Internationale Veröffentlichungsnummer: WO 2014/023514

(56) Entgegenhaltungen:
- EP-A2- 1 998 299
- EP-A2- 2 388 735
- GB-A- 2 378 073
- GB-A- 2 391 129

## Beschreibung

Die vorliegende Erfindung betrifft ein Dokumentenlesegerät, insbesondere ein Dokumentenlesegerät zur Erfassung von Daten eines Identifikationsdokumentes.

In hoheitlich sicherheitsrelevanten Bereichen, wie beispielsweise an Flughäfen, muss die Identität einer reisenden Person mehrfach überprüft werden. Hierzu sind üblicherweise räumlich verteilte Identifikationskontrollstellen eines Kontrollsystems, beispielsweise eines Grenzkontrollsystems (Border-Control-System), vorgesehen.

Zur Erfassung von Identitätsdaten verfügt jede Identifikationskontrollstelle über ein Dokumentenlesegerät, das die Identitätsdaten, beispielsweise einen Namen der Person, anhand eines Identifikationsdokumentes ausliest.

Ein herkömmliches Dokumentenlesegerät umfasst eine Dokumentenauflage, auf die ein Identifikationsdokument zur Datenerfassung auflegbar ist. Die Dokumentenauflage ist üblicherweise lichttransparent, so dass die unterhalb der Dokumentenauflage angeordnete Kamera das Identifikationsdokument optisch erfassen kann. Hierzu kann das Identifikationsdokument mittels Infrarot- oder Ultraviolettlicht beleuchtet werden.

Zum Auslesen von Daten eines Identifikationsdokumentes, beispielsweise eines Reisepasses, wird dieses insbesondere aufgeklappt in wohldefinierter Weise auf die Dokumentenauflage, welche durch eine Glasplatte gebildet wird, aufgelegt. Unterhalb der Dokumentenauflage befindet sich eine Kamera sowie beispielweise ein Weißlicht-, Ultraviolettlicht- oder Infrarot-Leuchtmittel, welches das Identifikationsdokument mit Licht einer vorbestimmten Wellenlänge beleuchtet. Zum Auslesen der Kameradaten und zur Steuerung des Leuchtmittels kann beispielsweise ein Prozessor eingesetzt werden, welcher beispielsweise bei richtiger Lage einer Datenseite eines Identifikationsdokumentes auf einer Dokumentenauflage die Echtheit des Dokumentes erfassen und beispielsweise ein entsprechendes Signal ausgeben kann. Wird das Identifikationsdokument jedoch beispielsweise verdreht auf die Dokumentenauflage aufgelegt, so können Erfassungsfehler entstehen, welche die Überprüfung der Echtheit eines Identifikationsdokumentes erschweren.

Ein Nachteil der bekannten Dokumentenlesegeräte besteht darin, dass diese meist nur von geschultem Personal zuverlässig bedient werden können. Dies ist dadurch begründet, dass die Identifikationsdokumente üblicherweise in einer ganz bestimmten Art und Weise, beispielsweise gerade ausgerichtet, auf die Dokumentenauflagen aufgelegt werden müssen, damit eine fehlerfreie Datenerfassung durchgeführt werden kann. Daher ist eine fehlerfreie Selbstbedienung von Dokumentenlesegeräten durch ungeschultes Personal, wie beispielsweise durch Reisende, nicht ohne weiteres möglich. Eine Selbstbedienung der Dokumentenlesegeräte durch Reisende ist jedoch wünschenswert, um beispielsweise einen rascheren Grenzübergang oder eine raschere Personenabfertigung in einem Flughafen zu ermöglichen.

Ein weiterer Nachteil der bekannten Dokumentenlesegeräte ist deren Empfindlichkeit gegenüber Streulicht. Denn bei einem Streulichteinfall auf die transparente Dokumentenauflage und somit in einen Kamera-Erfassungsbereich können optische Merkmale eines Identifikationsdokumentes, beispielsweise Ultraviolett-Merkmale, nicht zuverlässig erfasst werden.

Die GB 2 391 129 A offenbart ein Bilderfassungssystem mit einem Scanner.

Die EP 1 998 299 A2 offenbart einen Reisekiosk mit einem Touchscreen.

Die EP 2 388 735 A2 offenbart ein mobiles Gerät zur Erfassung eines Dokuments.

Die GB 2 378 073 A offenbart eine Videokamera mit einer Halterung.

Es ist daher die Aufgabe der vorliegenden Erfindung, ein effizienteres Dokumentenlesegerät zu schaffen, das beispielsweise eine Selbstbedienung durch ungeschulte Benutzer ermöglicht.

Diese Aufgabe wird durch die Merkmale des unabhängigen Anspruchs gelöst. Weitere Ausführungsformen sind Gegenstand der abhängigen Ansprüche, der Beschreibung sowie der Zeichnungen.

Die Erfindung basiert auf der Erkenntnis, dass diese Aufgabe durch eine automatische Benutzerführung gelöst werden kann, bei der beispielsweise einem Benutzer in Echtzeit angezeigt wird, wie dieser ein Identifikationsdokument auf eine Dokumentenauflage auflegen soll, damit eine fehlerfreie Datenerfassung bewirkt werden kann.

Gemäß einem Aspekt betrifft die Erfindung ein Dokumentenlesegerät gemäß Anspruch 1. Die Anzeigeeinrichtung kann beispielsweise durch ein semitransparentes Display gebildet sein, welches oberhalb der Dokumentenauflage angeordnet ist. Mittels der Anzeigeeinrichtung kann der Benutzer bei der Bedienung des Dokumentenlesegerätes unterstützt bzw. geführt werden. Legt ein Benutzer ein Identifikationsdokument falsch auf die Dokumentenauflage, so wird mittels der Anzeigeeinrichtung beispielsweise angezeigt, welche Maßnahmen durchzuführen sind, um eine korrekte Orientierung bzw. Positionierung des Identifikationsdokumentes auf der Dokumentenauflage zu bewirken. Durch die Benutzerführung mittels der Anzeigeeinrichtung kann daher eine hohe Akzeptanz des erfindungsgemäßen Dokumentenlesegerätes bei Benutzern, welche keinerlei technisches Vorwissen aufweisen, erwartet werden.

Das Identifikationsdokument ist kein Bestandteil des Dokumentenlesegerätes. Das Identifikationsdokument ist beispielsweise ein Ausweisdokument, ein Reisepass, ein Zahlungsmittel, beispielsweise eine Bankkarte oder eine Kreditkarte, ein Führerschein, ein Unternehmensausweis, ein Frachtbrief oder ein Berechtigungsausweis. Im Allgemeinen kann das Identifikationsdokument auch jedes andere Dokument sein, dessen Identität und Echtheit bestätigt werden soll.

Gemäß einer Ausführungsform ist die Anzeigeeinrichtung oberhalb der Dokumentenauflage derart angeordnet, dass das Identifikationsdokument zwischen der Dokumentenauflage und der Anzeigeeinrichtung positionierbar ist. Zwischen der Dokumentenauflage und der Anzeigeeinrichtung kann so eine beispielsweise seitlich jeweils offene Nische entstehen, in welche das Identifikationsdokument einführbar ist. Befindet sich das Identifikationsdokument auf der Dokumentenauflage, so ist die Anzeigeeinrichtung oberhalb des Identifikationsdokumentes angeordnet, so dass ein Benutzer des Dokumentenlesegerätes unmittelbar auf die Anzeigeeinrichtung schauen und eine Position des Identifikationsdokumentes auf der Dokumentenauflage korrigieren kann, sofern sich die Ist-Position des Identifikationsdokumentes von der Soll-Position unterscheidet.

Die Soll-Position kann beispielsweise durch einen mechanischen Anschlag auf der Dokumentenauflage gebildet sein. Dadurch wird verhindert, dass ein Benutzer des Dokumentenlesegerätes das Identifikationsdokument beispielsweise über die Soll-Position hinaus verschiebt. Ferner sind die Koordinaten des mechanischen Anschlags bezüglich der Orientierung der Dokumentenauflage als Soll-Position vorgegeben. Die Soll-Position kann jedoch auch ausschließlich durch elektronische Koordinaten vorgegeben sein, welche als Datenersatz vorliegen können.

Die Anzeigeeinrichtung ist entweder innerhalb eines Parallelitätsbereichs oberhalb der Dokumentenauflage parallel zur Dokumentenauflage angeordnet. Der Parallelitätsbereich kann sich beispielsweise zwischen 80° und 100° oder zwischen 89° und 91° erstrecken bzw. genau 90° betragen. Dadurch wird ein definierter Bereich zur Aufnahme des Identifikationsdokumentes geschaffen.

Alternativ ist die Anzeigeeinrichtung schwenkbar bezüglich der Dokumentenauflage angeordnet. Dadurch kann die Anzeigeeinrichtung zum Auflegen des Identifikationsdokumentes auf die Dokumentenauflage beispielsweise hochgeklappt und hernach wieder zurückgeklappt werden, was eine ergonomische Bedienung des Dokumentenlesegerätes ermöglicht. Darüber hinaus kann die Anzeigeeinrichtung zum Benutzer hin geneigt werden, wodurch deren Ablesbarkeit verbessert werden kann.

Die Anzeigeeinrichtung ist zumindest teilweise lichttransparent, insbesondere semi-lichttransparent.

Gemäß einer Ausführungsform kann die Anzeigeeinrichtung beispielsweise elektrisch veränderbare Lichttransparenz aufweisen. Die Lichttransparenz kann beispielsweise in Abhängigkeit von einer elektrischen Spannung einstellbar sein. So kann die Anzeigeeinrichtung beispielsweise bei Abweichung der Soll-Position von der Ist-Position zumindest teilweise transparent sein, wobei das Licht beispielsweise nur zu 40% durchgelassen wird. Dadurch wird der Benutzer in die Lage versetzt, die Lage des Identifikationsdokumentes auf der Dokumentenauflage einzusehen und gemäß Hinweisen der Anzeigeeinrichtung zu korrigieren. Bei Übereinstimmung der Soll-Position mit der Ist-Position kann die Anzeigeeinrichtung beispielsweise abdunkeln und Licht intransparent werden, wodurch eine noch höhere Abschattung gegenüber Fremdlicht bewirkt werden kann. Dies kann zu einer Reduzierung der Auslesefehlerrate führen, denn die Anzeigeeinrichtung schirmt zumindest teilweise die Dokumentenauflage gegen Fremdlicht ab. Das Fremdlicht ist dasjenige Fremdlicht, das nicht durch das Dokumentenlesegerät zur optischen Erfassung des Identifikationsdokumentes erzeugt wird.

Der Begriff "Lichttransparenz" bezieht sich gemäß einer Ausführungsform auf das weiße Umgebungslicht bzw. Sonnenlicht und nicht notwendigerweise auf Ultraviolettlicht oder auf Infrarotlicht. Dadurch kann ein Benutzer des Dokumentenlesegerätes vor einem Ultraviolettlicht oder vor Infrarotlicht, das zur optischen Erfassung des Identifikationsdokumentes verwendet werden kann, geschützt werden. Ist die Anzeigeeinrichtung lichttransparent, so bewirkt sie keinerlei Lichtdämpfung. Ist die Anzeigeeinrichtung zumindest teilweise bzw. semi-lichttransparent, so ist sie beispielsweise zu 40% durchlässig für weißes Umgebungslicht. Auf diese Weise wird eine Abschottung gegen Fremdlicht bewirkt, welche insbesondere bei einer Prüfung von Ultraviolett-Sicherheitsmerkmalen vorteilhaft sein kann, um definierte Lichtbedingungen für ein ultraviolettes Lichtsignal zu determinieren. Die Anzeigeeinrichtung kann beispielsweise als ein transparentes oder als semitransparentes Display ausgebildet sein. Ein Vorteil der Lichttransparenz oder der zumindest teilweisen Lichttransparenz, insbesondere der Semilichttransparenz, ist, dass ein Benutzer des Dokumentenlesegerätes ununterbrochen seine eigene Hand sehen kann. Dies kann zu einer noch größeren Akzeptanz des Dokumentenlesegerätes bei ungeübten Benutzern führen. Ferner kann die Anzeigeeinrichtung die Abschattung gegen Fremdlicht bewirken, was bei einer Prüfung von Ultraviolett-Sicherheitsmerkmalen von Vorteil ist, weil Tageslicht Ultraviolett-Fluoreszenzen überdecken kann.

Gemäß einer Ausführungsform ist die Anzeigeeinrichtung als ein Display, insbesondere als ein semitransparentes Display, ausgebildet. Das Display kann eine lichtemittierende Diode (LED) oder eine organische lichtemittierende Diode (OLED) oder eine Folie mit LED- oder OLED-Lichtelementen aufweisen.

Gemäß einer Ausführungsform umfasst die Anzeigeeinrichtung zumindest ein Leuchtelement, beispielsweise eine lichtemittierende Diode (LED) oder eine organische lichtemittierende Diode (OLED) oder eine Flüssigkeitskristallanzeige (LCD, Liquid Crystal Display).

Gemäß einer Ausführungsform ist die Dokumentenauflage mit einem mechanischen Anschlag versehen, welcher die Soll-Position des Identifikationsdokumentes auf der Dokumentenauflage festlegt.

Gemäß einer Ausführungsform ist die Anzeigeeinrichtung ausgebildet, ein Bewegungsmuster zum Erreichen der Soll-Position anzuzeigen. Das Bewegungsmuster kann beispielsweise ein Aufklappen eines Passbuches, das ein Identifikationsdokument sein kann, aufzeigen. Generell kann das Bewegungsmuster bewegte Bilder anzeigen, um einem Benutzer die erforderlichen Maßnahmen zur Gewährleistung einer Erfassung von Sicherheitsmerkmalen oder zur Dokumentenerkennung anzuzeigen bzw. um den Benutzer zum Handeln zu motivieren.

Gemäß einer Ausführungsform ist die Anzeigeeinrichtung mit einem ersten Polarisationsfilter zum Durchlassen von Licht einer ersten Polarisation versehen. Die Dokumentenauflage kann mit einem zweiten Polarisationsfilter zum Durchlassen von Licht einer zweiten Polarisation versehen sein. Die erste Polarisation und die zweite Polarisation sind bevorzugt unterschiedlich und unterscheiden sich beispielsweise um einen Winkel von 90°. Auf diese Weise wird erreicht, dass die unterhalb der lichttransparenten Dokumentenauflage angeordnete Kamera durch das durch die Anzeigeeinrichtung hindurchtretende Licht geschützt werden kann. Denn die Anordnung der beiden Polarisationsfilter ist derart gewählt, dass die Polarisationswinkel unterschiedlich sind. Gemäß einer Ausführungsform sind die Polarisationsfilter ausgebildet, senkrecht zueinander stehende Polarisationswinkel durchzulassen. Auf diese Weise wird das durch die Anzeigeeinrichtung durchscheinende Licht durch das zweite Polarisationsfilter der Dokumentenauflage geblockt.

Die Dokumentenauflage kann beispielsweise transparent sein, wobei das zweite Polarisationsfilter in die Dokumentenauflage integriert oder als eine Filterschicht gebildet sein kann. Dies kann beispielsweise durch eine Polarisationsschicht realisiert werden. Dann kann das Umgebungslicht, das durch das beispielsweise semitransparente Display, das die Anzeigeeinrichtung bilden kann, und das auf das Identifikationsdokument fällt, nicht mehr bis zur unterhalb der Dokumentenauflage angeordneten Kamera hindurchdringen. Der Benutzer kann jedoch weiterhin seine Hand sowie das Identifikationsdokument sehen, und die Kamera kann weiterhin das Identifikationsdokument unter Nutzung von Weißlicht, Ultraviolettlicht und Infrarotlicht erfassen.

Gemäß einer Ausführungsform bedeckt die Anzeigeeinrichtung die Dokumentenauflage. Hierzu kann die Anzeigeeinrichtung derartige Abmessungen aufweisen, dass eine Abdeckung der darunter liegenden Dokumentenauflage erfolgt. Auf diese Weise wird die Dokumentenauflage durch die Anzeigeeinrichtung gegen Fremdlicht geschützt. Die Schutzwirkung erhöht sich mit sinkender Transparenz der Anzeigeeinrichtung, welche beispielsweise eine Lichttransparenz von 40% aufweisen kann.

Gemäß einer Ausführungsform umfasst die Dokumentenauflage eine Lichtschranke. Die Lichtschranke ermöglicht die automatische Erkennung des Vorhandenseins des Identifikationsdokuments auf der Dokumentenauflage, wodurch die Anzeigeeinrichtung beispielsweise zur optischen Benutzerführung mittels optischer Signale veranlasst werden kann.

Gemäß einer Ausführungsform umfasst die Erfassungseinrichtung zumindest einen optischen Sensor oder eine optische Aufnahmekamera. Der optische Sensor oder die optische Aufnahmekamera können unterhalb der Dokumentenauflage angeordnet sein. Die Erfassungseinrichtung kann ferner eine Lichtquelle, beispielsweise eine Weißlichtquelle, eine Ultraviolett-Lichtquelle oder eine Infrarot-Lichtquelle aufweisen, um das Identifikationsdokument zur Merkmalserfassung anzustrahlen.

Gemäß einer Ausführungsform ist die Erfassungseinrichtung ausgebildet, die Ist-Position mittels einer Mustererkennung auf der Basis einer optischen Aufnahme eines Merkmals des Identifikationsdokumentes, insbesondere einer Kontur des Identifikationsdokumentes, zu bestimmen. Hierzu kann die Erfassungseinrichtung einen Prozessor aufweisen. Die Ist-Position kann beispielsweise auf der Basis eines digitalen Vergleichs der Ist-Positionsdaten und der Soll-Positionsdaten durchgeführt werden. Das Merkmal des Identifikationsdokumentes kann beispielsweise dessen geometrische Form sein. So ist die Kontur des Identifikationsdokumentes beispielsweise eine Kante oder eine Ecke oder eine Anordnung von Ecken des Identifikationsdokumentes.

Gemäß einer Ausführungsform ist die Erfassungseinrichtung ausgebildet, die erfasste Ist-Position des Identifikationsdokumentes mit der Soll-Position zu vergleichen, um eine Abweichung zwischen der Ist-Position und der Soll-Position zu bestimmen. Im Falle einer Abweichung kann die Anzeigeeinrichtung beispielsweise ein erstes Signal oder eine Folge von ersten Signalen anzeigen, welche eine bestimmte Farbe aufweisen können. Bei Erreichen der Soll-Position durch das Identifikationsdokument kann die Anzeigeeinrichtung entweder ein zweites Signal oder eine zweite Signalfolge einer weiteren Farbe, beispielsweise Grün, anzeigen oder erlöschen.

Gemäß einem weiteren Aspekt betrifft die Erfindung eine Identifikationskontrollstelle, beispielswiese ein eGate, mit dem erfindungsgemäßen Dokumentenlesegerät.

Gemäß einem weiteren Aspekt betrifft die Erfindung ein Dokumentenleseverfahren gemäß Anspruch 11. Weitere Verfahrensschritte ergeben sich unmittelbar aus der Funktionalität des erfindungsgemäßen Dokumentenlesegerätes.

Gemäß einem weiteren Aspekt betrifft die Erfindung ein Computerprogramm zum Ausführen des Dokumentenleseverfahrens, wenn das Computerprogramm auf einem Computer ausgeführt wird.

Weitere Ausführungsbeispiele werden Bezug nehmend auf die beiliegenden Zeichnungen näher erläutert. Es zeigen:
- Fig. 1: ein Dokumentenlesegerät gemäß einer Ausführungsform;
- Fig. 2: ein Dokumentenlesegerät gemäß einer Ausführungsform; und
- Fig. 3: eine Draufsicht auf ein Dokumentenlesegerät gemäß einer Ausführungsform.

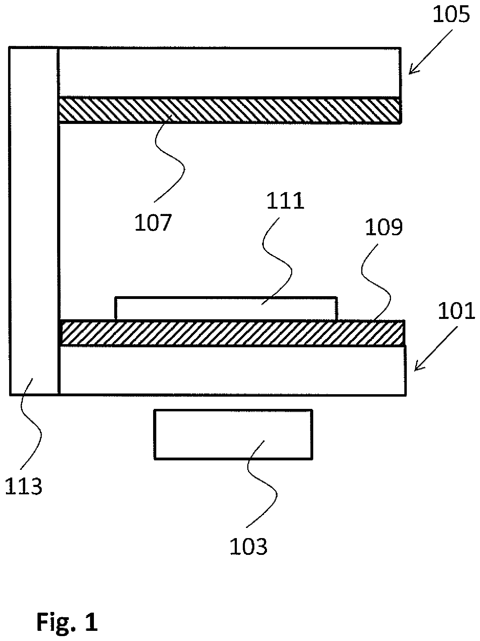

Fig. 1 zeigt schematisch ein Dokumentenlesegerät gemäß einer Ausführungsform. Das Dokumentenlesegerät umfasst eine Dokumentenauflage 101, eine unterhalb der Dokumentenauflage 101 angeordnete Erfassungseinrichtung 103 sowie eine Anzeigeeinrichtung 105, welche oberhalb der Dokumentenauflage 101 angeordnet ist.

Die Anzeigeeinrichtung 105 ist beispielsweise als ein lichttransparentes oder als ein semilichttransparentes Display gebildet. Hierzu kann die Anzeigeeinrichtung 105 Leuchtelemente, wie beispielsweise Licht emittierende Dioden, organische lichtemittierende Dioden oder Flüssigkristallanzeigeelemente umfassen.

Die Dokumentenauflage 101 ist beispielsweise lichttransparent ausgeführt. Hierzu kann die Dokumentenauflage 101 aus Glas, das für die entsprechenden Beleuchtungsspektren durchlässig ist, gefertigt sein.

Gemäß einer optionalen Ausführungsform ist die Anzeigeeinrichtung 105 mit einem ersten Polarisationsfilter 107 versehen, welches das Licht einer ersten Polarisation durchlässt. Die Dokumentenauflage 101 ist mit einem zweiten Polarisationsfilter 109 versehen, welches das Licht einer zweiten Polarisation durchlässt. Sind die Polarisationen unterschiedlich, so bewirken beide Polarisationsfilter 107, 109, dass das Licht, welches die transparente oder semi-transparente Anzeigeeinrichtung 105 passiert, nicht durch die Dokumentenauflage 101 hindurchdringen und die Erfassungseinrichtung 103 erreichen kann. Dadurch wird die Erfassungseinrichtung 103 gegen Fremdlicht zumindest teilweise abgeschirmt.

Gemäß einer Ausführungsform ist die Anzeigeeinrichtung 105 intransparent gegenüber UV-Licht oder IR-Licht. Auf diese Weise wird das UV-Licht oder das IR-Licht, das zur Erfassung des Identifikationsdokumentes 111 beispielsweise durch die Erfassungseinrichtung 103 erzeugt wird, durch die Anzeigeeinrichtung 105 geblockt. Dadurch wird ein Benutzer des Dokumentenlesegerätes gegen UV-Licht oder IR-Licht geschützt.

Die Erfassungseinrichtung 103 kann beispielsweise eine Kamera zum Aufnehmen eines Bildes des Identifikationsdokumentes 111 umfassen. Darüber hinaus kann die Erfassungseinrichtung 103 eine Lichtquelle, beispielsweise eine Weißlichtquelle, eine oder mehrere Infrarot-Lichtquellen oder eine oder mehrere Ultraviolett-Lichtquellen, aufweisen, um das Identifikationsdokument 111 durch die Dokumentenauflage 101 hindurch zu beleuchten.

Die Anzeigeeinrichtung 105 kann mittels einer Halterung 113 oberhalb der Dokumentenauflage 101 beispielsweise an einem Korpus des Dokumentenlesegerätes befestigt sein. Die Befestigung kann eine starre Befestigung sein, bei der die Anzeigeeinrichtung 105 beispielsweise parallel innerhalb des vorgenannten Parallelitätsbereichs zu der Dokumentenauflage 101 angeordnet ist.

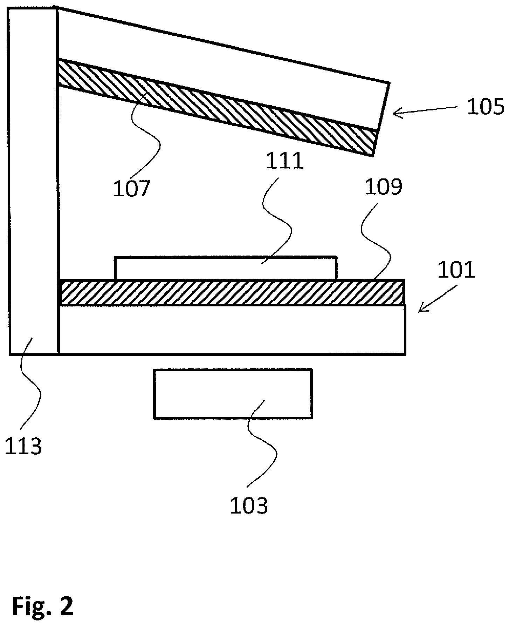

Gemäß einer Ausführungsform kann die Anzeigeeinrichtung 105 an der Halterung 113 schwenkbar gelagert sein, wie es in Fig. 2 dargestellt ist. Auf diese Weise kann diese zum Auflegen des Identifikationsdokumentes 111 auf die Dokumentenauflage 101 beispielsweise nach oben aufgeschwenkt und hiernach zurückgeschwenkt werden. Die Anzeigeeinrichtung 105 kann ferner in Richtung der Dokumentenauflage 101 geneigt werden, was ein ergonomisches Ablesen der Anzeigeeinrichtung 105 ermöglichen kann.

Die Anzeigeeinrichtung 105 ist bevorzugt zur Benutzerführung mittels optischer Signale vorgesehen. Hierzu kann die Anzeigeeinrichtung 105 ausgebildet sein, optische Signale auszustrahlen, welche einen Benutzer bei einer korrekten Positionierung des Identifikationsdokumentes 111 auf der Dokumentenauflage 101 unterstützen. Die optischen Signale können beispielsweise durch farbige, beispielsweise grüne oder rote, Pfeile zur Benutzerführung oder angezeigte Bewegungsmuster realisiert werden.

Unterscheidet sich eine Ist-Position des Identifikationsdokumentes 111 von der gewünschten Soll-Position des Identifikationsdokumentes 111 auf der Dokumentenauflage 101, so kann die Anzeigeeinrichtung 105 einen Hinweis zur Erreichung der Soll-Position anzeigen. Dieser Hinweis kann beispielsweise durch einen farbigen Pfeil, welcher die weitere Bewegungsrichtung des Identifikationsdokumentes anzeigt, oder durch ein Bewegungsmuster erfolgen. Bei einem Unterschied zwischen der Ist-Position und der Soll-Position zeigt die Anzeigeeinrichtung 105 beispielsweise an, wie das Identifikationsdokument 111 aufzulegen ist, damit die Soll-Position erreicht werden kann.

Die Soll-Position kann beispielsweise eine bestimmte Position auf der Dokumentenauflage 101 sein, welche beispielsweise durch elektronische Koordinaten vorgegeben ist. Die Soll-Position kann jedoch auch durch einen mechanischen Anschlag festgelegt sein.

Zur Feststellung, ob das Identifikationsdokument 111 die Soll-Position auf der Dokumentenauflage 101 erreicht hat, kann die Erfassungseinrichtung 103 beispielsweise einen Prozessor umfassen, welcher die Ist-Position mit der Soll-Position vergleicht und die Anzeigeeinrichtung 105 bzw. deren Leuchtelemente ansteuert.

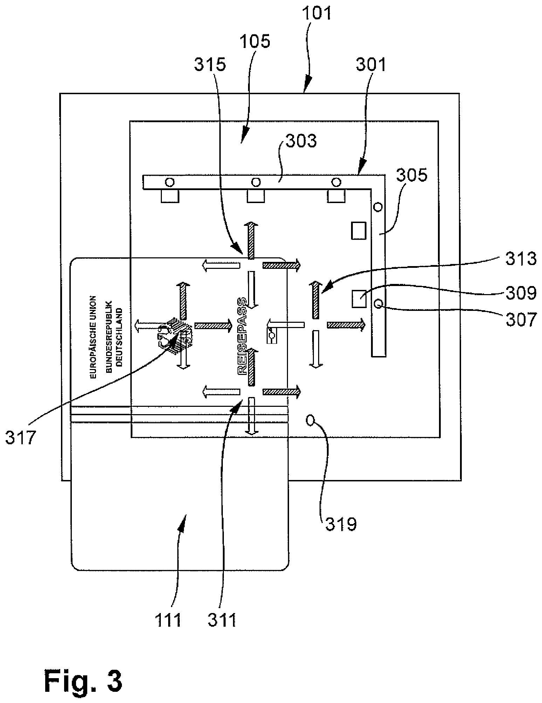

Fig. 3 zeigt eine Draufsicht auf ein Dokumentenlesegerät gemäß einer Ausführungsform. Das in Fig. 3 gezeigte Dokumentenlesegerät kann die Merkmale des in Fig. 1 oder in Fig. 2 gezeigten Dokumentenlesegerätes aufweisen, und vice versa.

Wie in Fig. 3 dargestellt, ist die Dokumentenauflage 101 mit einem mechanischen Anschlag 301 versehen, welcher beispielsweise zwei rechtwinklig zueinander angeordneten Schenkel 303 und 305 umfasst.

Ferner sind optionale Leuchtelemente 307 zur Anschlagssignalisierung vorgesehen, welche gemäß einer Ausführungsform in den Schenkeln 303 und 305 eingelassen sind. Gemäß einer anderen Ausführungsform sind die Leuchtelemente 307 über dem mechanischen Anschlag 301 in der Anzeigeeinrichtung 105 angeordnet. Die Leuchtelemente 307 können beispielsweise durch lichtemittierende Dioden gebildet sein.

Die Dokumentenauflage 101 umfasst ferner optional mechanische Andruckelemente 309, welche beispielsweise entlang der Schenkel 303, 305 angeordnet sind.

Die oberhalb der Dokumentenauflage 101 angeordnete Anzeigeeinrichtung 105 überdeckt die Dokumentenauflage 101 zumindest teilweise. Zur Anzeige eines Unterschieds zwischen einer Ist-Position und einer Soll-Position des Identifikationsdokumentes 111 umfasst die Anzeigeeinrichtung 105 Pfeilgruppen 311, 313, 315 und 317. Jede der Pfeilgruppen umfasst vier Pfeile, welche jeweils in der Gestalt eines Koordinatensystems angeordnet sind und in unterschiedliche Richtungen zeigen. Die Pfeile der jeweiligen Pfeilgruppe sind beispielsweise einzeln anwählbar bzw. zum Leuchten aktivierbar. Durch das Aufleuchten der Pfeile kann einem Benutzer angezeigt werden, ob das Identifikationsdokument 111 mehr nach rechts, mehr nach links, mehr nach vorne oder zurückgeschoben werden soll.

Gemäß einer Ausführungsform umfasst die Dokumentenauflage 101 oder die Anzeigeeinrichtung 105 eine Lichtschranke 319, welche eine Detektion des Identifikationsdokumentes ermöglicht.

Wie in Fig. 3 dargestellt, befindet sich die Anzeigeeinrichtung 105 oberhalb bzw. über der Dokumentenauflage 101, welche aus einer Auflagefläche ausgebildet sein kann. Die Anzeigeeinrichtung 105 kann als eine flächige Abdeckplatte gebildet sein, welche an einigen oder allen Seiten bis auf eine Ebene der Dokumentenauflage 101 herabgeführt werden kann. An einer Seite ist eine Öffnung zur Einführung des Identifikationsdokumentes vorgesehen, welche je nach Anwendung auch an zwei oder drei Seiten gebildet sein kann. Das Identifikationsdokument 111 wird auf die Dokumentenauflage 101 gelegt und dann in Richtung der beispielsweise passend geschalteten und in der Anzeigeeinrichtung 105 eingearbeiteten Pfeilgruppen 311, 313, 315, 317 beispielsweise bis zum mechanischen Anschlag 301 bewegt. Passiert das Identifikationsdokument 111 die Lichtschranke 319, wird beispielsweise die Erfassungseinrichtung 103, welche eine interne Kamera aufweisen kann, gestartet, so dass die Auflageposition des Identifikationsdokumentes 111 berechnet werden kann. Auf diese Weise kann eine Abweichung zwischen der Auflageposition, d.h. der Ist-Position des Identifikationsdokumentes, und der gewünschten Soll-Position auf der Auflagefläche 101 berechnet werden.

Gemäß einer Ausführungsform kann die Auflageerkennung durch ein Polling der Kamera mit reduzierter Auflösung und/oder durch eine Detektion eines RFID-Chips erfolgen, welcher in dem Identifikationsdokument enthalten sein kann. Für die RFID-Detektion kann neben der Dokumentenauflage 101 oder um die Dokumentenauflage 101 herum oder in der Dokumentenauflage 101 integriert eine Antenne vorgesehen sein. Die Antenne kann beispielsweise Antennendrähte aufweisen, welche in der Dokumentenauflage 101 oder in der Anzeigeeinrichtung 105 angebracht sind.

Das in den Fig. 1 bis 3 dargestellte Dokumentenlesegerät kann für Identifikationsdokumente unterschiedlichen Formats eingesetzt werden. Ist beispielsweise bei ID-3-Identifikationsdokumenten die Anschlagsposition, welche durch den mechanischen Anschlag 301 vorgegeben ist, erreicht, so verlöschen beispielsweise die Leuchtpfeile der Pfeilgruppen 311 bis 317. Bei Identifikationsdokumenten der Klassen ID-1 und ID-2 reicht es jedoch aus, wenn das jeweilige Identifikationsdokument vollständig von der Kamera erfasst wird, welche ein Element der Erfassungseinrichtung 103 sein kann. In diesem Falle können die Leuchtelemente 307, welche in der Anzeigeeinrichtung 105 über dem mechanischen Anschlag 301 angebracht sind, eingeschaltet sein.

Die optionalen mechanischen Andruckelemente 309 sind vorgesehen, das Identifikationsdokument 111 bei Erreichen der durch den mechanischen Anschlag 301 vorgegebenen Anschlagposition mechanisch zu fixieren. Nach Beendigung der Prüfung des Identifikationsdokumentes 111 werden die mechanischen Andruckelemente 309 gelöst. Der Benutzer kann beispielsweise durch in bestimmte Richtung weisende grüne Pfeile der Pfeilgruppen 311 bis 317 aufgefordert werden, das Identifikationsdokument 111 zu entfernen.

Ist das Identifikationsdokument 111 falsch aufgelegt, beispielsweise mit der Datenseite nach oben, so kann der Benutzer durch entsprechende Pfeilanzeige ebenfalls zum Entfernen des Identifikationsdokumentes aufgefordert werden.

Bei einem beispielsweise um 180° verdrehten Identifikationsdokument kann der Benutzer beispielsweise durch rotierende Pfeile der Pfeilgruppen 311 bis 317 zum Drehen des Identifikationsdokumentes 111 aufgefordert werden.

Die optische Benutzerführung durch die leuchtenden Pfeile der Pfeilgruppen 311 bis 317 kann durch akustische Signale unterstützt werden. Hierzu kann die Anzeigeeinrichtung 105 zumindest eine Lautsprechermembran aufweisen, welche einen oder mehrere Töne aussenden kann.

Die durch die Anzeigeeinrichtung 105 bereitgestellten optischen Signalisierungen können durch statische und/oder durch dynamische Anzeigen durchgeführt werden. Gemäß einer Ausführungsform können die Pfeile der Pfeilgruppen 311 bis 317 nicht nur eine Farbe, beispielsweise Grün, sondern auch wechselbare Farben anzeigen.

Die Ausbildung der Anzeigeeinrichtung 105 ermöglicht eine intuitive Benutzerführung. So kann die Anzeigeeinrichtung 105 aus UV- oder IR-undurchlässigem, für sichtbares Licht jedoch transparentem Kunststoff geformt sein. Der Benutzer kann dadurch die Position des Identifikationsdokumentes auf der Dokumentenauflage 101 stets erkennen. Die Anzeigeeinrichtung 105 kann jedoch aus Material mit elektrisch änderbarer Transparenz gebildet sein. Ist das Identifikationsdokument 111 beispielsweise erkannt und liegt es richtig, so kann die Anzeigeeinrichtung undurchsichtig und während eines Prüfvorgangs, bei dem das Identifikationsdokument 111 optisch erfasst wird, abgedunkelt bleiben, wodurch das Eindringen von Fremdlicht in das System, insbesondere in die Kamera der Erfassungseinrichtung 103, deutlich reduziert werden kann.

Gemäß einer Ausführungsform kann die Anzeigeeinrichtung 105 aus in seiner Transparenz unveränderbarem, dunkel eingefärbtem Material, das beispielsweise eine Lichtdämpfung von 40% bewirkt, geformt sein.

Gemäß einer weiteren Ausführungsform kann das Material der Anzeigeeinrichtung 105 nur für Licht mit einem geringen Winkel um eine Achse, welche zwischen dem Dokumentenlesegerät und einem Benutzer geführt wird, durchlässig sein, wobei aus allen anderen Richtungen einfallendes Licht die Anzeigeeinrichtung nicht durchdringt. Hierzu kann das in Fig. 1 dargestellte erste Polarisationsfilter 107 vorgesehen sein.

Gemäß einer Ausführungsform können in dem mechanischen Anschlag 301 Luftdüsen zur Reinigung der Dokumentenauflage beispielsweise von Staub eingebaut bzw. eingebracht werden.

Die Anordnung der Anzeigeeinrichtung 105, welche ein semitransparentes Display sein kann, direkt über der Dokumentenauflage 101 und somit direkt über dem Identifikationsdokument 111 ist mit dem Vorteil verbunden, dass eine Benutzerführung unmittelbar an dem Identifikationsdokument 111 erfolgt. Auf diese Weise erhält ein Benutzer eine unmittelbare Rückmeldung von der Ist-Position zu der Soll-Position bzw. zu Soll-Bewegungen, solange die Soll-Position nicht erreicht ist. Dadurch werden ergonomische Hindernisse reduziert, was zu einem höheren Erfassungsdurchsatz vom Dokumentenlesegerät führen kann.

### Bezugszeichenliste

- 101: Dokumentenauflage
- 103: Erfassungseinrichtung
- 105: Anzeigeeinrichtung
- 107: erster Polarisationsfilter
- 109: zweiter Polarisationsfilter
- 111: Identifikationsdokument
- 113: Halterung
- 301: mechanischer Anschlag
- 303: Schenkel
- 305: Schenkel
- 307: Leuchtelement
- 309: Andruckelement
- 311: Pfeilgruppe
- 313: Pfeilgruppe
- 315: Pfeilgruppe
- 317: Pfeilgruppe
- 319: Lichtschranke

## Patentansprüche

1. Dokumentenlesegerät, mit:
einer Dokumentenauflage (101) zum Auflegen eines Identifikationsdokumentes;
einer Erfassungseinrichtung (103) zum Erfassen einer Ist-Position des Identifikationsdokumentes auf der Dokumentenauflage; und
einer Anzeigeeinrichtung (105) zum Anzeigen eines Hinweises auf die Soll-Position des Identifikationsdokumentes auf der Dokumentenauflage, wobei die Anzeigeeinrichtung (105) zumindest teilweise lichttransparent ist,
wobei die Anzeigeeinrichtung (105) ausgebildet ist, anzuzeigen, welche Maßnahmen durchzuführen sind, um eine korrekte Orientierung des Identifikationsdokumentes auf der Dokumentenauflage (101) zu bewirken, wenn ein Benutzer das Identifikationsdokument falsch auf die Dokumentenauflage (101) auflegt,
wobei die Anzeigeeinrichtung (105) ausgebildet ist, ein Bewegungsmuster zum Erreichen der Soll-Position anzuzeigen, wobei das Bewegungsmuster bewegte Bilder anzeigt, um dem Benutzer erforderliche Maßnahmen zur Gewährleistung einer Erfassung von Sicherheitsmerkmalen oder zur Dokumentenerkennung anzuzeigen,
wobei die Anzeigeeinrichtung (105) innerhalb eines Parallelitätsbereichs oberhalb der Dokumentenauflage parallel zur Dokumentenauflage oder schwenkbar bezüglich der Dokumentenauflage angeordnet ist.

2. Dokumentenlesegerät nach Anspruch 1, wobei die Anzeigeeinrichtung (105) oberhalb der Dokumentenauflage derart angeordnet ist, dass das Identifikationsdokument zwischen der Dokumentenauflage und der Anzeigeeinrichtung positionierbar ist.

3. Dokumentenlesegerät nach einem der vorhergehenden Ansprüche, wobei die Anzeigeeinrichtung (105) zumindest ein Leuchtelement, insbesondere eine lichtemittierende Diode oder eine Flüssigkristallanzeige, umfasst.

4. Dokumentenlesegerät nach einem der vorhergehenden Ansprüche, wobei die Anzeigeeinrichtung (105) ausgebildet ist, bei Abweichung der Soll-Position von der Ist-Position ein erstes optisches Muster oder bei Übereinstimmung der Soll-Position und der Ist-Position ein zweites optisches Muster zur Benutzerführung anzuzeigen.

5. Dokumentenlesegerät nach einem der vorhergehenden Ansprüche, wobei die Anzeigeeinrichtung (105) mit einem ersten Polarisationsfilter zum Durchlassen von Licht einer ersten Polarisation versehen ist, und wobei die Dokumentenauflage (101) mit einem zweiten Polarisationsfilter zum Durchlassen von Licht einer zweiten Polarisation versehen ist versehen ist, wobei die erste Polarisation und die zweite Polarisation unterschiedlich sind.

6. Dokumentenlesegerät nach einem der vorhergehenden Ansprüche, wobei die Dokumentenauflage (101) mit einem mechanischen Anschlag versehen ist, welcher die Soll-Position definiert.

7. Dokumentenlesegerät nach einem der vorhergehenden Ansprüche, wobei die Anzeigeeinrichtung (105) die Dokumentenauflage (101) zumindest teilweise überdeckt.

8. Dokumentenlesegerät nach einem der vorhergehenden Ansprüche, wobei die Erfassungseinrichtung (103) einen optischen Sensor oder eine optische Aufnahmekamera aufweist.

9. Dokumentenlesegerät nach einem der vorhergehenden Ansprüche, wobei die Erfassungseinrichtung (103) ausgebildet ist, die Ist-Position mittels einer Mustererkennung auf der Basis einer optischen Aufnahme eines Merkmals des Identifikationsdokumentes, insbesondere einer Kontur des Identifikationsdokumentes, zu bestimmen.

10. Dokumentenlesegerät nach einem der vorhergehenden Ansprüche, wobei die Erfassungseinrichtung (103) ausgebildet ist, die erfasste Ist-Position des Identifikationsdokumentes mit der Soll-Position zu vergleichen, um eine Abweichung zwischen der Ist-Position und der Soll-Position zu bestimmen.

11. Dokumentenleseverfahren, mit:
Erfassen einer Ist-Position des Identifikationsdokumentes auf einer Dokumentenauflage eines Dokumentenlesegerätes; und
Anzeigen eines Hinweises auf eine Soll-Position des Identifikationsdokumentes auf der Dokumentenauflage, wobei der Hinweis mittels einer Anzeigeeinrichtung über dem Identifikationsdokument angezeigt wird, wobei die Anzeigeeinrichtung (105) zumindest teilweise lichttransparent ist,
wobei die Anzeigeeinrichtung anzeigt, welche Maßnahmen durchzuführen sind, um eine korrekte Orientierung des Identifikationsdokumentes auf der Dokumentenauflage (101) zu bewirken, wenn ein Benutzer das Identifikationsdokument falsch auf die Dokumentenauflage (101) auflegt,
wobei die Anzeigeeinrichtung (105) ein Bewegungsmuster zum Erreichen der Soll-Position anzeigt, insbesondere ein Aufklappen eines Identifikationsdokuments, wobei das Bewegungsmuster bewegte Bilder anzeigt, um dem Benutzer erforderliche Maßnahmen zur Gewährleistung einer Erfassung von Sicherheitsmerkmalen oder zur Dokumentenerkennung anzuzeigen,
wobei die Anzeigeeinrichtung (105) innerhalb eines Parallelitätsbereichs oberhalb der Dokumentenauflage parallel zur Dokumentenauflage oder schwenkbar bezüglich der Dokumentenauflage angeordnet ist.

12. Computerprogramm zum Ausführen des Dokumentenleseverfahrens nach Anspruch 11, wenn das Computerprogramm auf einem Computer ausgeführt wird.

## Claims

1. Document reading device, comprising:
a document bed (101) for placing an identification document;
a detection device (103) for detecting an actual position of the identification document on the document bed; and
a display device (105) for displaying an indication of the target position of the identification document on the document bed, wherein the display device (105) is at least partially light-transparent,
wherein the display device (105) is configured to display which actions are to be carried out in order to ensure a correct orientation of the identification document on the document bed (101) when a user incorrectly places the identification document on the document bed (101),
wherein the display device (105) is configured to display a movement pattern for reaching the target position, wherein the movement pattern displays moving images in order to display to the user actions required to ensure a detection of security features or for document recognition,
wherein the display device (105) is arranged within a parallelism region above the document bed parallel to the document bed or pivotable with respect to the document bed.

2. Document reading device according to claim 1, wherein the display device (105) is arranged above the document bed such that the identification document can be positioned between the document bed and the display device.

3. Document reading device according to one of the preceding claims, wherein the display device (105) comprises at least one light-emitting element, in particular a light-emitting diode or a liquid crystal display.

4. Document reading device according to one of the preceding claims, wherein the display device (105) is configured to display a first optical pattern when the target position deviates from the actual position or a second optical pattern when the target position and the actual position match for user guidance.

5. Document reading device according to one of the preceding claims, wherein the display device (105) is provided with a first polarization filter for passing light of a first polarization, and wherein the document bed (101) is provided with a second polarization filter for passing light of a second polarization, wherein the first polarization and the second polarization are different.

6. Document reading device according to one of the preceding claims, wherein the document bed (101) is provided with a mechanical stop which defines the target position.

7. Document reading device according to one of the preceding claims, wherein the display device (105) at least partially covers the document bed (101).

8. Document reading device according to one of the preceding claims, wherein the detection device (103) comprises an optical sensor or an optical recording camera.

9. Document reading device according to one of the preceding claims, wherein the detection device (103) is configured to determine the actual position by means of a pattern recognition on the basis of an optical recording of a feature of the identification document, in particular a contour of the identification document.

10. Document reading device according to one of the preceding claims, wherein the detection device (103) is configured to compare the detected actual position of the identification document with the target position in order to determine a deviation between the actual position and the target position.

11. Document reading method, comprising:
detecting an actual position of the identification document on a document bed of a document reader; and
displaying an indication of a target position of the identification document on the document bed, wherein the indication is displayed by means of a display device above the identification document, wherein the display device (105) is at least partially light-transparent,
wherein the display device displays which actions are to be carried out in order to ensure a correct orientation of the identification document on the document bed (101) when a user incorrectly places the identification document on the document bed (101),
wherein the display device (105) displays a movement pattern for reaching the target position, in particular an opening of an identification document, wherein the movement pattern displays moving images in order to display the user actions required to ensure detection of security features or for document recognition,
wherein the display device (105) is arranged within a parallelism region above the document bed parallel to the document bed or pivotable with respect to the document bed.

12. Computer program for executing the document reading method according to claim 11 when the computer program is executed on a computer.

## Revendications

1. Dispositif de lecture de documents, comprenant :
un support de document (101) pour placer un document d'identification ;
un dispositif de détection (103) pour détecter une position réelle du document d'identification sur le support de document ; et
un dispositif d'affichage (105) pour afficher une indication de la position cible du document d'identification sur le lit de documents, le dispositif d'affichage (105) étant au moins partiellement transparent à la lumière,
dans lequel le dispositif d'affichage (105) est configuré pour afficher les actions à effectuer afin de garantir une orientation correcte du document d'identification sur le support de document (101) lorsqu'un utilisateur place de manière incorrecte le document d'identification sur le support de document (101),
dans lequel le dispositif d'affichage (105) est configuré pour afficher un modèle de mouvement pour atteindre la position cible, dans lequel le modèle de mouvement affiche des images animées afin d'afficher à l'utilisateur les actions requises pour assurer une détection de caractéristiques de sécurité ou pour la reconnaissance de documents,
dans lequel le dispositif d'affichage (105) est disposé dans une région de parallélisme au-dessus du lit de document parallèlement au lit de document ou pivotant par rapport au lit de document.

2. Dispositif de lecture de documents selon la revendication 1, dans lequel le dispositif d'affichage (105) est disposé au-dessus du lit de documents de telle sorte que le document d'identification peut être positionné entre le lit de documents et le dispositif d'affichage.

3. Dispositif de lecture de documents selon l'une des revendications précédentes, dans lequel le dispositif d'affichage (105) comprend au moins un élément électroluminescent, notamment une diode électroluminescente ou un écran à cristaux liquides.

4. Dispositif de lecture de documents selon l'une des revendications précédentes, dans lequel le dispositif d'affichage (105) est configuré pour afficher un premier motif optique lorsque la position cible s'écarte de la position réelle ou un deuxième motif optique lorsque la position cible et la position réelle correspondent pour le guidage de l'utilisateur.

5. Dispositif de lecture de document selon l'une quelconque des revendications précédentes, dans lequel le dispositif d'affichage (105) est pourvu d'un premier filtre de polarisation pour laisser passer la lumière d'une première polarisation, et dans lequel le lit de document (101) est pourvu d'un second filtre de polarisation pour laisser passer la lumière d'une seconde polarisation, la première polarisation et la seconde polarisation étant différentes.

6. Dispositif de lecture de documents selon l'une des revendications précédentes, dans lequel le lit de documents (101) est pourvu d'une butée mécanique qui définit la position cible.

7. Dispositif de lecture de documents selon l'une des revendications précédentes, dans lequel le dispositif d'affichage (105) recouvre au moins partiellement le lit de documents (101).

8. Dispositif de lecture de documents selon l'une des revendications précédentes, dans lequel le dispositif de détection (103) comprend un capteur optique ou une caméra d'enregistrement optique.

9. Dispositif de lecture de document selon l'une des revendications précédentes, dans lequel le dispositif de détection (103) est configuré pour déterminer la position réelle au moyen d'une reconnaissance de formes sur la base d'un enregistrement optique d'une caractéristique du document d'identification, en particulier d'un contour du document d'identification.

10. Dispositif de lecture de document selon l'une des revendications précédentes, dans lequel le dispositif de détection (103) est configuré pour comparer la position réelle détectée du document d'identification avec la position cible afin de déterminer un écart entre la position réelle et la position cible.

11. Procédé de lecture de document, comprenant :
détecter une position réelle du document d'identification sur un plateau de document d'un lecteur de document ; et
afficher une indication d'une position cible du document d'identification sur le support de document, l'indication étant affichée au moyen d'un dispositif d'affichage au-dessus du document d'identification, le dispositif d'affichage (105) étant au moins partiellement transparent à la lumière,
dans lequel le dispositif d'affichage affiche les actions à effectuer afin de garantir une orientation correcte du document d'identification sur le support de document (101) lorsqu'un utilisateur place de manière incorrecte le document d'identification sur le support de document (101),
dans lequel le dispositif d'affichage (105) affiche un modèle de mouvement pour atteindre la position cible, en particulier une ouverture d'un document d'identification, dans lequel le modèle de mouvement affiche des images animées afin d'afficher les actions de l'utilisateur requises pour assurer la détection de caractéristiques de sécurité ou pour la reconnaissance de documents,
dans lequel le dispositif d'affichage (105) est disposé dans une région de parallélisme au-dessus du lit de document parallèlement au lit de document ou pivotant par rapport au lit de document.

12. Programme informatique permettant d'exécuter le procédé de lecture de document selon la revendication 11 lorsque le programme informatique est exécuté sur un ordinateur.
